# EUROPEAN PATENT APPLICATION

(11) **EP 2 512 166 A1**
(43) Date of publication of application: **17.10.2012**
(21) Application number: 10842850.9
(22) Date of filing: 23.03.2010
(51) Int. Cl.: H04W 12/04

(54) **METHOD FOR REALIZING SECRET KEY MAPPING, AUTHENTICATION SERVER, TERMINAL AND SYSTEM THEREOF**

(30) Priority: 15.01.2010 CN 201010001241
(71) Applicant: ZTE Corporation, Shenzhen, Guangdong 518057 (CN)
(72) Inventor: WANG, Hongyan, Guangdong 518057 (CN); WEI, Yinxing, Guangdong 518057 (CN)
(74) Representative: Jansen, Cornelis Marinus
(86) International application number: PCT/CN2010/071207
(87) International publication number: WO 2011/085566

(57) **Abstract**

The disclosure discloses a method for implementing key mapping applied to a Next Generation Network (NGN), which mainly includes: when a handoff of a terminal from an original network to a destination network is performed, an authentication server receiving a key material mapping request from the terminal, mapping an original key material in the original network to obtain a destination key material in the destination network, and setting up communication security between the terminal and the destination network. In addition, the disclosure further discloses an authentication server, a terminal and a system for implementing key mapping. By applying the solution of the disclosure, when the handoff of the terminal between different NGNs is performed, it is possible to improve the efficiency of session key generation and to reduce the time delay of the handoff of the terminal between the networks, and it is advantageous to reduce authentication signaling interaction and the load of the authentication server.

## Description

### TECHNICAL FIELD

The disclosure relates to the field of communications, in particular to a method, an authentication server, a terminal and a system for implementing key mapping in a Next Generation Network (NGN).

### BACKGROUND

The NGN, which is taken as an evolved network framework based on packet switch, has been concerned increasingly. The International Telecommunication Union Telecommunication Standardization Sector (ITU-T) and other regional standardization organizations, such as the European Telecommunications Standards Institute (ETSI), the Alliance for Telecommunications Industry Solutions (ATIS), and the like, perform extensive research and standardization on the framework model and the service of the NGN and the related field.

The NGN is capable of supporting heterogeneous network access, inter-network roaming and seamless handoff. When a terminal of a user performs a handoff, it is necessary to ensure service continuity, as well as the security and integrity of signaling data and user data between the terminal and an NGN access point.

When the handoff of the terminal is performed between different networks, it is necessary to regenerate a root key, an intermediate key and a session key in each network after authentication, as a result of which the time delay of the handoff of the terminal is increased, and the load of authentication signaling interaction and the authentication server is increased.

### SUMMARY

In view of this, the main object of the disclosure is to provide a method, an authentication server, a terminal and a system for implementing key mapping, so as to improve the efficiency of session key generation, reduce the time delay of the handoff of the terminal between different networks, decrease authentication signaling interaction and alleviate the load of the authentication server when the handoff of the terminal between different NGNs is performed.

In order to achieve the above-mentioned object, the technical solution of the disclosure is implemented below.

The disclosure provides a method for implementing key mapping, which includes: when a handoff of a terminal from an original network to a destination network is performed, an access device in the destination network receiving a key material mapping request from the terminal and transmitting the key material mapping request to an authentication server; and the authentication server, after receiving the key material mapping request, mapping an original key material in the original network to obtain a destination key material of the destination network and setting up communication security between the terminal and the destination network.

In the above-mentioned solution, wherein after obtaining the destination key material, the authentication server returns a mapping response to the terminal; and the terminal maps the original key material in the original network to obtain the destination key material of the destination network and completes the setup of the communication security between the terminal and the destination network.

In the above-mentioned solution, the process of mapping the original key material in the original network to obtain the destination key material of the destination network is performed by the terminal before or after or at the same time with the process of returning the mapping response to the terminal performed by the authentication server.

In the above-mentioned solution, the original key material in the authentication server is generated by the authentication server after authentication of the terminal in the original network is successful, or is carried in the key material mapping request transmitted by the terminal.

In the above-mentioned solution, the process of mapping the original key material to obtain the destination key material specifically includes: mapping the original key material to obtain the destination key material in the destination network in accordance with a predetermined mapping rule; and the method further includes: obtaining the destination session key material in the destination network from the obtained destination key material in a key deduction way in the destination network.

The disclosure further provides an authentication server for implementing key mapping, which includes: a receiving unit and a first mapping unit, wherein the receiving unit is configured to receive a key material mapping request from a terminal when a handoff of the terminal from an original network to a destination network is performed, and to transmit the key material mapping request to the first mapping unit; and the first mapping unit is configured to map the original key material in the original network to obtain the destination key material of the destination network after receiving the key material mapping request from the receiving unit.

In the above-mentioned solution, the authentication server further includes: a transmitting unit, wherein the first mapping unit is further configured to transmit the obtained destination key material to the transmitting unit; and the transmitting unit is configured to return a mapping response to the terminal after receiving the destination key material from the first mapping unit.

In the above-mentioned solution, the authentication server further includes: a first generating unit, configured to generate the original key material after authentication of the terminal is successful in the original network.

In the above-mentioned solution, the first mapping unit is configured to map the original key material generated by the first generating unit to obtain the destination key material of the destination network in accordance with a predetermined mapping rule; and the first mapping unit is further configured to obtain a destination session key material in the destination network from the obtained destination key material in accordance with a key deduction way in the destination network.

The disclosure further provides a terminal for implementing key mapping, which includes: a second generating unit, a handoff unit and a second mapping unit, wherein the second generating unit is configured to generate an original key material; the handoff unit is configured to perform a handoff from an original network to a destination network and to activate the second mapping unit; and the second mapping unit is configured to map the original key material generated by the second generating unit to obtain a destination key material.

The present disclosure further provides a system for implementing key mapping, which includes: a terminal for implementing key mapping, and an authentication server for implementing the key mapping, wherein the terminal is configured to transmit a key material mapping request to the authentication server when a handoff from an original network to a destination network is performed; and the authentication server is configured to map the original key material in the original network to obtain a destination key material in the destination network after receiving the key material mapping request from the terminal and to set up communication security between the terminal and the destination network.

In the disclosure, the destination root key of the destination network can be obtained from the original root key of the original key material in the original network which has already been generated, in accordance with the predetermined mapping rule, and then the destination session key material is finally obtained from the destination root key in accordance with the key deduction way of the destination network, so that the process of mapping the original key material to obtain the destination key material is completed, while it is not necessary to regenerate a new key to obtain the destination key when the handoff of the terminal to the destination network has been completed, so that efficiency of the session key generation can be improved, the time delay of the handoff of the terminal between different NGNs is reduced, moreover, the authentication signaling interaction is decreased effectively and the load of the authentication server is alleviated.

### BRIEF DESCRIPTION OF THE DRAWINGS

Fig. 1 is a flowchart showing a method for implementing key mapping according to the disclosure;
Fig. 2 is a flowchart showing a process of mapping an original key material to obtain a destination key material;
Fig. 3 is a flowchart showing a process of mapping an original key material to a destination key material at a terminal;
Fig. 4 is a flowchart of a method for implementing key mapping in the first embodiment of the disclosure;
Fig. 5 is a flowchart of a method for implementing key mapping in the second embodiment of the disclosure;
Fig. 6 is a flowchart of a method for implementing key mapping in the third embodiment of the disclosure;
Fig. 7 is a flowchart of a method for implementing key mapping in the fourth embodiment of the disclosure;
Fig. 8 is a flowchart of a method for implementing key mapping in the fifth embodiment of the disclosure;
Fig. 9 is a flowchart of a method for implementing key mapping in the sixth embodiment of the disclosure;
Fig. 10 is a structure diagram showing the composition of an authentication server for implementing key mapping according to the disclosure;
Fig. 11 is a structure diagram showing the composition of a terminal for implementing key mapping according to the disclosure; and
Fig. 12 is a structure diagram showing the composition of a system for implementing key mapping according to the disclosure.

### DETAILED DESCRIPTION

The specific implementation of the technical solution of the disclosure is described in detail below with reference to the drawings.

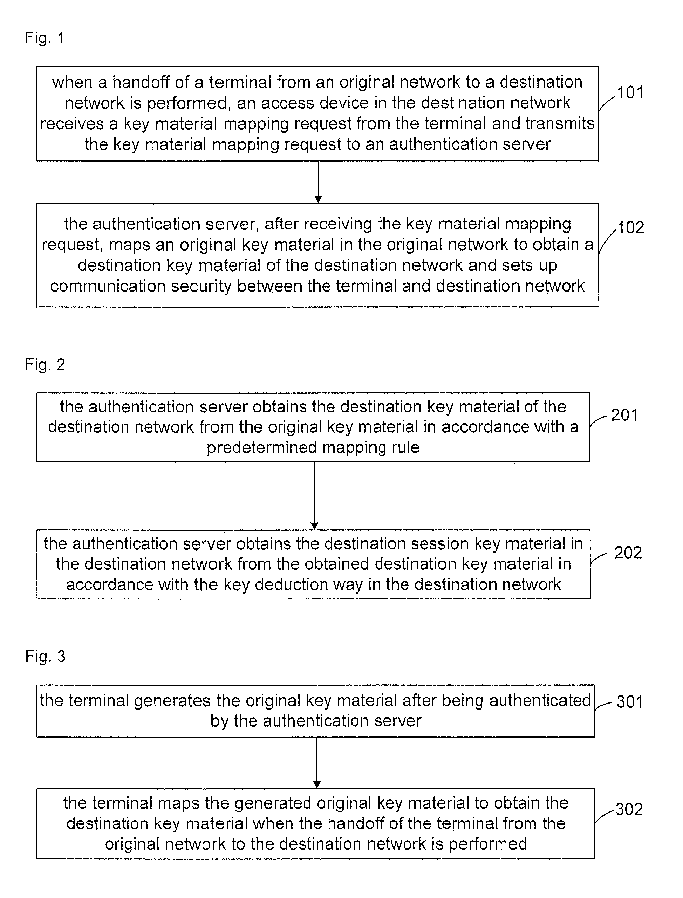

As shown in Fig. 1, a method for implementing key mapping according to the disclosure, which is applied to an NGN, includes the steps below.

Step 101: when a handoff of a terminal from an original network to a destination network is performed, an access device in the destination network receives a key material mapping request from the terminal and transmits the key material mapping request to an authentication server.

Here, the key material mapping request may include the original key material of the original network or only include identity information for initiating the mapping process below.

Here, the original network and the destination network may have the same key deduction way and medium, or have different key deduction ways. Generally, if the network medium and authentication ways are different, the key deduction ways in the NGN may be different.

Step 102: the authentication server, after receiving the key material mapping request, maps an original key material in the original network to obtain a destination key material of the destination network and sets up communication security between the terminal and destination network.

Wherein in the step 102, after obtaining the destination key material, the authentication server may return a mapping response to the terminal and the terminal maps the original key material in the original network to obtain the destination key material of the destination network and completes the setup of the communication security between the terminal and the destination network.

Here, the process of mapping the original key material to obtain the destination key material is performed by the terminal before or after or at the same time with the process of returning the mapping response to the terminal performed by the authentication server.

Wherein the original key material in the authentication server is generated by the authentication server after authentication of the terminal in the original network is successful, or is carried in the key material mapping request transmitted by the terminal.

Here, in Step 101, before the handoff of the terminal from the original network to the destination network, the method may further include: in the original network, the authentication server generates the original key material after the authentication of the terminal is successful.

Here, the generated original key material may include an original root key in the original network, each original intermediate key obtained from the root key, an original session key obtained from the original intermediate key in accordance with the key deduction way of the original network, and the like.

As shown in Fig. 2, in Step 102, the process of mapping the original key material in the original network to obtain the destination key material of the destination network by the authentication server may specifically includes the steps below.

Step 201: the authentication server obtains the destination key material of the destination network from the original key material in accordance with a predetermined mapping rule.

Here, after the step 201 the method may further include:
Step 202: the authentication server obtains the destination session key material in the destination network from the obtained destination key material in accordance with the key deduction way in the destination network.

Wherein the destination key material obtained through mapping may include the destination root key in the destination network, and may also include each destination intermediate key obtained from the destination root key in accordance with the key deduction way.

Here, the predetermined mapping rule may be determined according to the requirement in the practical application.

For example, the mapping rule may be determined according to the requirement of the root key property of the original network such as format, size and other properties, and according to the requirement of the root key property of the destination network.

The mapping rule may be set to a direct mapping, i.e., directly using the original key material as the destination key material, or the mapping rule can also be set that part of the original key material is intercepted to serve as the destination key. For example, the original key material is a string of 5 bits, while the destination root key in the destination network can only contain a string of 2 bits, then a string of 2 bits may be randomly or sequentially intercepted from the original key material to serve as the destination key material; if the destination root key in the destination network can contain the string of 5 bits, the original key material may directly serve as the destination key material.

Or, a new key can be generated from the original key material in accordance with the predetermined mapping rule to serve as the destination key material.

Wherein the process of returning the mapping response to the terminal performed by the authentication server may include:
the authentication server, after obtaining the destination session key material, returning the mapping response to the terminal to notify the terminal that the key processing in the destination network has been completed.

Here the mapping response may include response information of the obtained destination session key material, or response information only for identifying that the destination session key material has been obtained.

In addition, as shown in Fig. 3, in the method for implementing key mapping according to the disclosure, the process of mapping the original key material to obtain the destination key material at the terminal specifically includes the steps below.

Step 301: the terminal generates the original key material after being authenticated by the authentication server.

Step 302: the terminal maps the generated original key material to obtain the destination key material when the handoff of the terminal from the original network to the destination network is performed.

Here, in the step 302, the specific process of mapping the generated original key material to obtain the destination key material is the same as that in the step 102, it is unnecessary to make further description herein.

In practical application, after both the terminal and the authentication server obtain the destination session key material, the terminal can implement secure communication in the destination network through the destination session key material.

The specific implementation of the method for implementing key mapping according to the disclosure is described in detail below.

### First embodiment

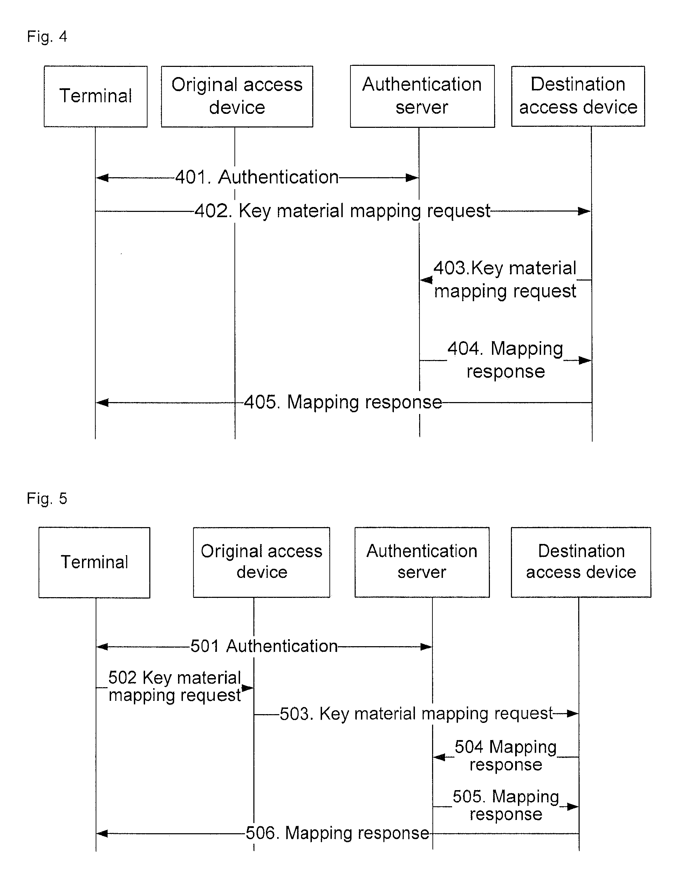

As shown in Fig. 4, a system for implementing key mapping includes: a terminal, an original access device of an original network, a destination access device of a destination network and an authentication server, a method for completing key mapping through the system may include the following below.

Step 401: in an original NGN, an authentication process between the terminal and the authentication server is completed, and when the authentication is successful, both the terminal and the authentication server generate an original key material,
here, the original key material may include: an original root key in the original NGN, each original intermediate key obtained from the original root key, and an original session key finally obtained in accordance with a key deduction way of the original NGN, and the terminal can implement a secure session in the original NGN through the original key material,
wherein the original access device may also participate in the authentication process.

Step 402: when a handoff of the terminal from the original NGN to a destination NGN, the terminal transmits a key material mapping request to the destination access device;
wherein the key material mapping request may include the generated original key material, or may not include said original key but only serve as identification information for initiating the process of mapping the original key material to the destination key material.

Step 403: the destination access device forwards the key material mapping request to the authentication server.

Step 404: the authentication server maps the original key material generated by the authentication server or carried in the key material mapping request to obtain the destination key material, and then transmits a mapping response to the destination access device,
here, the obtained destination key material includes a destination root key of the destination network, each destination intermediate key obtained from the destination root key in accordance with a key deduction way of the destination NGN, and the like,
after the destination key material is obtained, the destination session key material is finally obtained from the destination key material in accordance with the key deduction way of the destination NGN.

The mapping response may include the obtained destination session key material and/or the destination key material, or may only serve as information for identifying the obtained destination session key material.

Step 405: the destination access device forwards the mapping response to the terminal, the mapping is successful, and the terminal performs secure communication with other terminals or servers and the like in the destination NGN under the protection of the destination key.

Here, when the handoff of the terminal from the original NGN to the destination NGN, the terminal also maps the generated original key material to obtain the destination key material, and after both the terminal and the authentication server obtain the destination key material and the destination session key material, the terminal can perform secure session in the destination NGN through the destination key.

### Second embodiment

As shown in Fig. 5, the method key mapping through the system for key mapping in the first embodiment may also be implemented by the steps below.

Step 501: the process here is completely the same as that in Step 401.

Step 502: when the handoff of the terminal from the original NGN to the destination NGN is performed, the terminal transmits the key material mapping request to the original access device.

Step 503: the original access device forwards the key material mapping request to the destination access device.

Specifically, information such as the address of the destination access device and the like can be carried in the key material mapping request, or, when the handoff of the terminal from the original NGN to the destination NGN is performed, the information such as the address of the destination access device and the like are transmitted to the original access device and be stored in it at first, so that the original access device can forward the key material mapping request to the destination access device according to the carried or stored information such as the address of the destination access device and the like when receiving the key material mapping request.

Step 504 to step 506: the processes here are completely the same as those in the step 403 to the step 405.

It can be seen from the above-mentioned process that other processes in this embodiment are completely the same as that in the first embodiment, and the difference lies in that the key material mapping request from the terminal is forwarded to the destination access device through the original access device.

### Third embodiment

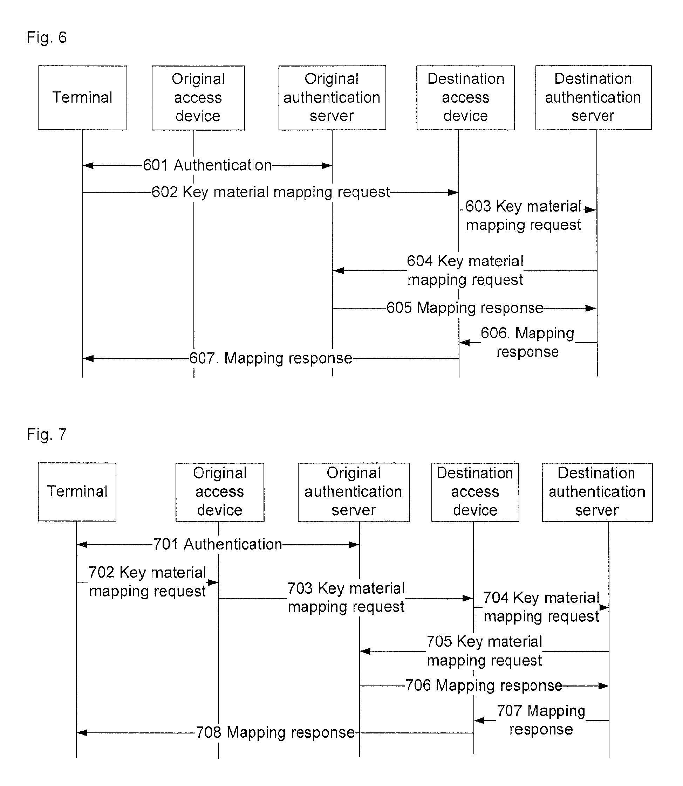

As shown in Fig. 6, the system for implementing key mapping in the embodiment mainly includes: the terminal, the original access device and the original authentication server of the original network, and the destination access device and the destination authentication server of the destination network; the method for key mapping through the system for key mapping in the embodiment can be implemented by the steps below.

Step 601: in the original NGN, the authentication between the terminal and the original authentication server is completed, and when the authentication is successful, both the terminal and the original authentication server generate an original key.

Step 602: the process here is completely the same as that in the step 402.

Step 603: the destination access device forwards the key material mapping request to the destination authentication server.

Step 604: the destination authentication server forwards the key material mapping request to the original authentication server.

Specifically, information such as the address of the original authentication server and the like can be carried in the key material mapping request, or, when the handoff of the terminal from the original NGN to the destination NGN is performed, the information such as the address of the original authentication server and the like are transmitted to the destination authentication server and be stored at first, so that the destination authentication server can forward the key material mapping request to the original authentication server according to the carried or stored information such as the address of the original authentication server and the like when receiving the key material mapping request.

Step 605: the original authentication server transmits the mapping response to the destination authentication server after the process of mapping the original key material to obtain the destination key material.

Step 606: the destination authentication server forwards the mapping response to the destination access device.

Step 607: the process here is completely the same as that in the step 405.

It can be seen from the above-mentioned process that the embodiment can be applied in the case that the authentication server in the original NGN is different from that in the destination NGN.

### Fourth embodiment

As shown in Fig. 7, the method for key mapping through the system for completing key mapping in the third embodiment can also be implemented by the steps below.

Step 701: the process here is completely the same as that in the step 601.

Step 702: the process here is completely the same as that in the step 502.

Step 703: the process here is completely the same as that in the step 503.

Step 704 to step 708: the processes here are completely the same as those in the step 603 to the step 607.

In the embodiment, the key material mapping request from the terminal is forwarded to the destination access device by the original access device.

### Fifth embodiment

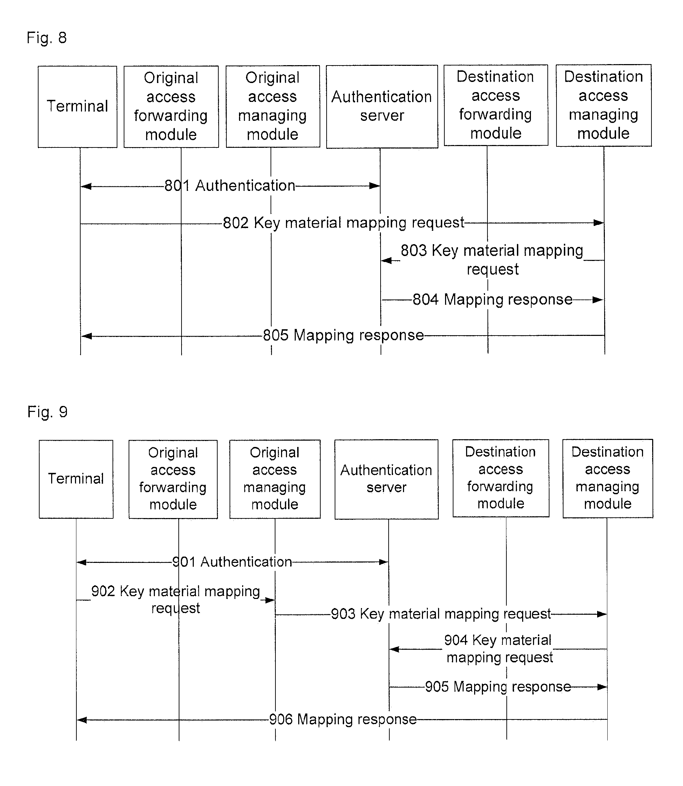

As shown in Fig. 8, in the embodiment, in the ITU-T NGN, the structural composition of the system for implementing key mapping is the same as that in the first and second embodiment, and the difference lies in that the original access device includes an original access forwarding module and an original access managing module, and the destination access device includes a destination access forwarding module and a destination access managing module.

Here, the original access forwarding module and the destination access forwarding module have the same function, but are not limited to the function of forwarding the signaling, such as an authentication message, between the terminal and the authentication server.

The original access managing module and the destination access managing module have the same function, but are not limited to the function of acquiring network information of the terminal, such as link information of the terminal in the network, location information of the terminal in the network and the like. In addition, they also serve as an authenticator in the authentication process or can also be configured to forward the authentication information of the terminal to the authentication server.

The method for key mapping through the system for key mapping in the embodiment can be implemented by the steps below.

Step 801: the process here is completely the same as that in the step 401.

Step 802: when the handoff of the terminal from the original NGN to the destination NGN is performed, the terminal transmits the key material mapping request to the destination access managing module of the destination access device,
here, the key material mapping request can also be forwarded to the destination access managing module through the destination access forwarding module.

Step 803: the destination access managing module forwards the key material mapping request to the authentication server.

Step 804: the authentication server transmits the mapping response to the destination access managing module of the destination access device after the process of mapping the original key material to obtain the destination key material is completed.

Step 805: the destination access managing module forwards the mapping response information to the terminal, the mapping is successful, and the terminal performs secure communication with other terminals or servers and the like in the destination NGN under the protection of the destination key material.

Here, the mapping response can also be forwarded by the destination access managing module to the terminal through the destination access forwarding module.

### Sixth embodiment

As shown in Fig. 9, the method for key mapping through the system for key mapping in the fifth embodiment can be implemented by the steps below.

Step 901: the process here is completely the same as that in the step 801.

Step 902: when the handoff of the terminal from the original NGN to the destination NGN, the terminal transmits the key material mapping request to the original access managing module of the original access device.

Step 903: the original access managing module forwards the key material mapping request to the destination access managing module of the destination access device.

Step 904 to Step 906: the processes here are completely the same as those in the step 803 to the step 805.

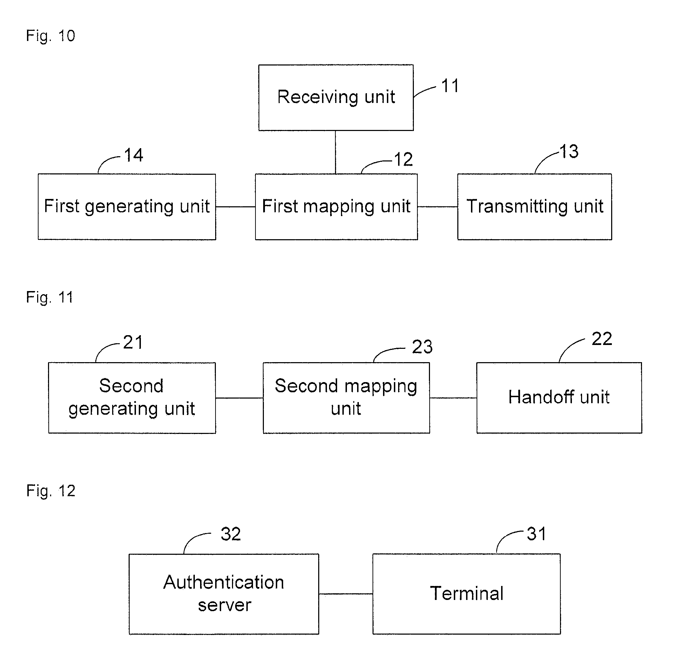

The authentication server for implementing key mapping according to the disclosure, as shown in Fig. 10, mainly includes: a receiving unit 11, and a first mapping unit 12, wherein
the receiving unit 11 is configured to receive a key material mapping request from a terminal when a handoff of the terminal from an original network to a destination network is performed and transmit the key material mapping request to the first mapping unit 12; and
the first mapping unit 12 is configured to map the original key material in the original network to obtain the destination key material in the destination network after receiving the key material mapping request from the receiving unit 11.

Wherein the above-mentioned authentication server for key mapping further includes: a transmitting unit 13, wherein
the first mapping unit 12 is further configured to transmit the obtained destination key material to the transmitting unit 13; and
the transmitting unit 13 is configured to return a mapping response to the terminal after receiving the destination key material from the first mapping unit 12.

Wherein the authentication server further includes:
a first generating unit 14 configured to generate the original key material after authentication of the terminal is successful in the original network.

Wherein the first mapping unit 12 is configured to map the original key material generated by the first generating unit 14 to obtain the destination key material of the destination network in accordance with a predetermined mapping rule,
wherein the first mapping unit 12 is further configured to obtain a destination session key material in the destination network from the obtained destination key material in accordance with a key deduction way in the destination network.

A terminal for implementing key mapping according to the disclosure, as shown in Fig. 11, mainly includes: a second generating unit 21, a handoff unit 22 and a second mapping unit 23, wherein
the second generating unit 21 is configured to generate an original key material;
the handoff unit 22 is configured to perform a handoff from an original network to a destination network and to activate the second mapping unit 23; and
the second mapping unit 23 is configured to mapping the original key material generated by the second generating unit 21 to obtain a destination key material.

A system for key mapping according to the disclosure, as shown in Fig. 12, includes the above-mentioned terminal 31 configured to implement key mapping, and the above-mentioned authentication server 32 configured to implement key mapping, wherein
the terminal 31 is configured to transmit a key material mapping request to the authentication server when a handoff from the original network to a destination network is performed; and
the authentication server 32 is configured to, mapping the original key material in the original network to obtain a destination key material in the destination network after receiving the key material mapping request from the terminal 31 and to set up communication security between the terminal and the destination network.

Here, the authentication server, terminal and system for implementing key mapping provided by the disclosure can be applied to the NGN, and the specific process of implementing key mapping in the NGN through the above-mentioned authentication server, terminal and system has been described in detail above, thereby there is no need to make further description.

All those described above are only preferred embodiments of the disclosure, and are not intend to limit the protection scope of the disclosure; any modifications, equivalent replacements, improvements and the like within the spirit and principle of the disclosure will lie in the protection scope of the disclosure.

## Claims

1. A method for implementing key mapping, comprising:
when a handoff of a terminal from an original network to a destination network is performed, an access device in the destination network receiving a key material mapping request from the terminal and transmitting the key material mapping request to an authentication server; and
the authentication server, after receiving the key material mapping request, mapping an original key material in the original network to obtain a destination key material of the destination network and setting up communication security between the terminal and the destination network.

2. The method for implementing key mapping according to claim 1, wherein after obtaining the destination key material, the authentication server returning a mapping response to the terminal; and the terminal mapping the original key material in the original network to obtain the destination key material of the destination network and completing the setup of the communication security between the terminal and the destination network.

3. The method for implementing key mapping according to claim 2, wherein the process of mapping the original key material to obtain the destination key material is performed by the terminal before or after or at the same time with the process of returning the mapping response to the terminal performed by the authentication server.

4. The method for implementing key mapping according to claim 1, 2, or 3, wherein the original key material in the authentication server is generated by the authentication server after authentication of the terminal in the original network is successful, or is carried in the key material mapping request transmitted by the terminal.

5. The method for implementing key mapping according to claim 4, wherein the process of mapping the original key material to obtain the destination key material specifically comprises: mapping the original key material to obtain the destination key material in the destination network in accordance with a predetermined mapping rule; and
the method further comprises: obtaining the destination session key material in the destination network from the obtained destination key material in a key deduction way in the destination network.

6. An authentication server for implementing key mapping, comprising: a receiving unit and a first mapping unit, wherein
the receiving unit is configured to receive a key material mapping request from a terminal when a handoff of the terminal from an original network to a destination network is performed, and to transmit the key material mapping request to the first mapping unit;
and the first mapping unit is configured to map the original key material in the original network to obtain the destination key material of the destination network after receiving the key material mapping request from the receiving unit.

7. The authentication server for implementing key mapping according to claim 6, further comprising a transmitting unit, wherein
the first mapping unit is further configured to transmit the obtained destination key material to the transmitting unit; and
the transmitting unit is configured to return a mapping response to the terminal after receiving the destination key material from the first mapping unit.

8. The authentication server for implementing key mapping according to claim 6 or 7, further comprising:
a first generating unit, configured to generate the original key material after authentication of the terminal is successful in the original network.

9. The authentication server for implementing key mapping according to claim 8, wherein the first mapping unit is configured to map the original key material generated by the first generating unit to obtain the destination key material of the destination network in accordance with a predetermined mapping rule; and
the first mapping unit is further configured to obtain a destination session key material in the destination network from the obtained destination key material in accordance with a key deduction way in the destination network.

10. A terminal for implementing key mapping, comprising: a second generating unit, a handoff unit and a second mapping unit, wherein
the second generating unit is configured to generate an original key material;
the handoff unit is configured to perform a handoff from an original network to a destination network and to activate the second mapping unit; and
the second mapping unit is configured to map the original key material generated by the second generating unit to obtain a destination key material.

11. A system for implementing key mapping, comprising: a terminal for implementing key mapping, and an authentication server for implementing the key mapping, wherein
the terminal is configured to transmit a key material mapping request to the authentication server when a handoff from an original network to a destination network is performed; and
the authentication server is configured to map the original key material in the original network to obtain a destination key material in the destination network after receiving the key material mapping request from the terminal and to set up communication security between the terminal and the destination network.
